# FASCICULE DE BREVET EUROPEEN

(11) **EP 0 781 511 B1**
(45) Date de publication et mention de la délivrance du brevet: **17.09.1997**
(21) Numéro de dépôt: 95440081.8
(22) Date de dépôt: 30.11.1995
(51) Int. Cl.: A23G 3/30, B29C 47/58

(54) **Tête de compression de machine de production de pâte à mâcher**
Presskopf für eine Vorrichtung zur Herstellung von Kaugummi
Compression head for an apparatus for producing chewing gum

(43) Date de publication de la demande: 02.07.1997
(73) Titulaire: PROFORM Sàrl, 67980 Hangenbieten (FR)
(72) Inventeur: Gand, Christian, F-67310 Westhoffen (FR)
(74) Mandataire: Littolff, Denis

(56) Documents cités:
- EP-A- 0 537 096
- DE-A- 2 523 836
- FR-A- 2 615 143

## Description

La présente invention concerne une tête de compression de machines de production de pâte à mâcher ou de pâte à chewing-gum, du type coextrudeuse à au moins une vis sans fin pour entraîner ladite pâte.

Dans de telles machines, entre l'étage comprenant les vis sans fin véhiculant la pâte et les filières d'extrusion de sortie donnant leur forme finale aux produits, se place un étage comportant des chambres de compression situées en amont et à proximité desdites filières d'extrusion.

Ces filières d'extrusion ne sont généralement pas uniques, de telle sorte qu'il puisse y avoir une production simultanée et en parallèle de plusieurs formes de produits. De plus, chaque filière peut être associée à au moins un canal d'amenée de pâte. Par exemple, la réalisation de produits bicolores est obtenue en utilisant des filières particulières, munies de deux zones distinctes associées à deux voies également distinctes.

D'une manière générale, on cherchera à faire fonctionner des coextrudeuses dont les têtes de compression sont munies de plusieurs filières d'extrusion à plusieurs voies fonctionnant en parallèle. Cette exigence implique l'existence d'un nombre correspondant de vis sans fin, véhiculant la pâte vers la sortie de la machine, et positionnées parallèlement les unes aux autres. Dans la suite, pour clarifier la démonstration, on limitera le nombre de voies à deux. Il y a donc deux vis sans fin entraînant la pâte dans deux chambres de compression débouchant sur une pluralité de filières d'extrusion à deux voies.

Les orifices, permettant la communication entre les canaux munis des vis sans fin et les chambres de compression, ne sont pas nécessairement placés dans l'axe des fières d'extrusion, puisque ces dernières sont généralement réparties à intervalles réguliers le long de la façade de sortie de la machine.

Or, les filières délimitant deux zones de passage des deux types de pâtes (deux couleurs, deux saveurs, etc.) sont supposées travailler en parallèle à la même vitesse, notamment pour que l'empaquetage en aval puisse être automatisé, alors que les trajets parcourus par la pâte desdits orifices provenant des vis sans fin auxdites filières sont différents. Or, du fait des pertes de charges au cours du déplacement, les filières sont souvent alimentées par deux pâtes dont les pressions ne sont pas égales. En l'absence de toute possibilité de réglage, les deux types de pâtes formant le produit final n'auraient pas la même section une fois sortis de la filière, et pourraient être à l'origine de troubles au niveau de l'empaquetage.

Ce problème particulier peut être résolu par réglage du débit de la pâte la plus rapide, pour l'amener au débit de la pâte lente, mais cela peut alors entraîner un déséquilibre dans la vitesse de production, notamment par rapport à d'autres filières placées différemment par rapport auxdits orifices, et dont les réglages propres n'aboutissent pas nécessairement à des vitesses de production équivalentes.

Ce double réglage, d'une part des débits des deux voies pour chaque filière, et d'autre part des vitesses desdites filières pour égaler les productions, représente un problème compliqué à gérer.

Dans les machines existant à ce jour, notamment divulguées dans le document EP-A-0 537 096, les chambres de compression ont un volume d'allure cylindrique, et sont superposées. Elles sont réalisées dans un bloc dont la face amont comporte les orifices de communication avec les vis sans fin de la coextrudeuse, alors que la face aval comporte les orifices de liaison avec les filières.

Les moyens de réglage sont constitués de disques logés dans des logements pratiqués dans ladite face aval, lesdits disques comportant deux trous ronds prolongés par des canaux en arc de cercle, et étant mobiles en rotation sous l'action d'une vis filetée tangentielle actionnant une portion dentée solidaire du disque. Lorsque les trous ronds sont parfaitement en face des orifices de sortie des chambres cylindriques, ils autorisent le passage d'une quantité maximale de pâte vers les voies des filières vers lesquelles ils donnent accès.

Lorsqu'on effectue une rotation du disque par commande de la tige filetée, le débit de pâte varie de la même manière pour les deux voies. En conséquence, le réglage de l'homogénéité de la pâte par exemple bicolore obtenue en sortie de chaque filière ne peut se faire qu'en trouvant un débit commun réglé en fait sur le débit acceptable pour la pâte ayant subi le plus de pertes de charges.

A ce stade, il faut évoquer un problème de réglage supplémentaire : les filières à deux voies comportent deux zones géographiquement distinctes, séparant les deux types de pâte, zones dont les surfaces respectives ne sont pas obligatoirement égales, sauf à limiter considérablement les possibilités de la machine. Ce problème se rajoute directement aux pertes de charge sur chaque voie de la filière.

Trouver un compromis sur l'homogénéité de l'ensemble à l'aide d'un moyen de réglage agissant d'une manière égale sur les deux voies, comme c'est le cas dans l'art antérieur, n'est donc pas adéquat, puisque cela revient à limiter encore le dénominateur commun entre les deux voies, déjà limité par la différence de pression en amont des filières.

Globalement, tous ces réglages par filière et le réglage général destiné à obtenir une vitesse égale par filière sont extrêmement difficiles à faire pour une structure telle que décrite, et nécessitent de nombreux tests. Il n'est pas rare que l'on ait besoin d'une journée complète pour réaliser un nouveau réglage d'une machine, par exemple lorsqu'on veut fabriquer de nouveaux produits, et que l'on doit pour cela changer les filières. C'est d'autant plus vrai que le nombre de filières est important.

Au surplus, la structure même de la tête de compression complique une telle opération, car tout changement de produit nécessite un nettoyage complet de ladite tête, qui n'est pas facile compte tenu de la configuration. En effet, le nettoyage des canaux cylindriques ne peut se faire que par leurs extrémités, lesquelles sont obturées au moins sur un côté par des bouchons amovibles. L'accès aux orifices d'entrée et de sortie de chaque chambre de compression ne peut être réalisé que tangentiellement, puisque le nettoyage desdites chambres se fait dans la direction de l'axe du cylindre. La difficulté de l'opération participe largement à la durée évoquée précédemment pour un changement de production.

La présente invention a pour but de remédier aux inconvénients précités, et notamment au problème crucial du réglage des sorties, même lorsque les filières sont nombreuses (elles peuvent atteindre 10 exemplaires répartis tout au long de la face de sortie de la machine).

Elle a également pour objectif principal de faciliter le nettoyage des différents éléments de la tête de compression, de façon à améliorer son efficacité et à réduire le temps de travail.

L'invention a de plus pour objectif de permettre la fabrication parallèle de produit dans des conditions de vitesse et de qualité qui sont strictement équivalentes d'une sortie à l'autre, quelque soit le type et le nombre de filières.

Elle a enfin pour but de proposer un dispositif assurant les conditions d'une hygiène accrue, facilitant toute opération de maintenance, et permettant une modularité jamais atteinte jusqu'ici.

Ces objectifs, et d'autres, sont réalisés en ce que les chambres de compression ont un volume dont la section, prise perpendiculairement à l'axe des vis sans fin, décroît de telle sorte que les chambres se rétrécissent en direction d'une plaque de fermeture aval, ladite plaque étant démontable et dotée d'au moins une filière d'extrusion de la pâte, la plus petite section étant de dimension telle qu'elle débouche sur toutes les filières d'extrusion.

La forme particulière des chambres de compression, à section variable progressive, obtenue notamment par fraisage en biais de la tête, implique deux conséquences distinctes :
- opérer une première régulation de la pression, qui est maintenue sensiblement constante dans chaque chambre, et
- permettre un nettoyage facile de la tête par dépose de la plaque de fermeture.

Le fraisage en biais conduit à une forme qui se caractérise en ce que les chambres de compression sont en forme d'entonnoirs déformés dont la grande section en entrée est d'allure oblongue, alors que la petite section est d'allure rectangulaire avec deux grands côtés horizontaux de longueur telle que ladite section de sortie débouche sur toutes les filières alignées sur la plaque de fermeture, les deux petits côtés formant respectivement un angle aigu et un angle obtus par rapport à l'axe central d'écoulement de la pâte à l'entrée. Au fur et à mesure que l'on s'éloigne de la partie alimentation, située du côté extrudeur, la section diminue, maintenant une pression et une vitesse constantes.

La plaque de fermeture est dotée de filières d'extrusions démontables reliées aux chambres de compression via un nombre de conduites correspondant au nombre de chambres de compression localisées en amont de ladite plaque. Cette dernière se monte par exemple par boulonnage sur la face aval de la tête de compression. Elle est par conséquent facilement démontable, ainsi d'ailleurs que les filières d'extrusion qui y sont fixées par un écrou de pression.

Chaque conduite reliant les filières d'extrusion aux chambres de compression est dotée de moyens de réglage du débit de la pâte. A l'inverse des machines de l'art antérieur, le réglage des débits est individualisé, autorisant une souplesse bien supérieure. La combinaison de la forme particulière des chambres, réduisant considérablement les pertes de charges, et de la souplesse de réglage au niveau de la sortie desdites chambres, permet d'aboutir à un équilibrage correct des productions des différentes filières beaucoup plus rapidement qu'auparavant.

Selon une configuration préférentielle de l'invention, lesdits moyens de réglage de débit comportent une vanne logée dans une rainure de dimension appropriée, dans laquelle elle est libre en translation, ladite vanne étant munie d'un taraudage dans lequel s'insère une tige filetée solidaire d'un bouton moleté, libre en rotation et manipulable de l'extérieur de la plaque de fermeture, permettant de faire varier l'ouverture de la conduite.

Les vannes précitées sont des plaques coulissant dans lesdites rainures, fonctionnant à la manière d'écluses autorisant ou inhibant le passage des produits pâteux. L'ensemble tige filetée/taraudage permet la transformation du mouvement rotatif imprimé au bouton moleté en un mouvement rectiligne de la vanne. Le réglage est au surplus fin, et autorise une optimisation des contrôles des différents débits, puis un ajustement global extrêmement précis.

Dans le cas particulier le plus courant, comprenant deux pâtes distinctes et donc deux voies par filière d'extrusion, chaque plaque de vanne est pilotable depuis l'extrémité supérieure ou inférieure de la plaque de fermeture aval. Les boutons moletés sont gradués, de sorte que l'utilisateur peut facilement retrouver ou noter les réglages utilisés.

Dans le document DE-A-2 523 386, le problème du maintien d'une telle machine à une température permettant de garder la fluidité de la pâte à une valeur correcte pour les traitements qu'elle subit est résolu par l'existence de résistances électriques placées dans les parois.

Selon l'invention, le volume comportant les chambres de compression ainsi que la plaque de fermeture comportent des canaux de circulation d'un fluide caloporteur maintenant une température prédéterminée dans ladite tête, lesdits canaux circulant également dans des capots latéraux permettant l'alimentation et la fermeture de boucles de circulation du fluide, et étant démontables de manière à permettre un accès auxdits canaux.

Selon l'invention, la tête de compression ainsi que la plaque de fermeture peuvent par exemple être réalisées en acier ou en inox, alors que les capots latéraux sont faits en aluminium. Cette configuration permet un accès aisé aux tuyauteries internes véhiculant le fluide caloporteur, notamment mais non exclusivement à des fins de nettoyage.

Il est clair que les machines de production de produits pâteux fonctionnent mieux lorsque la pâte a certaines caractéristiques de viscosité appropriée. Le maintien de ladite pâte à certaines températures préférentielles a pour but d'assurer les conditions d'utilisation optimales de la tête de compression, en cours de fonctionnement usuel. Secondairement, Si le produit reste visqueux, et ne durcit pas comme c'est le cas lorsqu'il sèche, l'appareil se nettoie beaucoup plus facilement.

Ce genre de procédé de fabrication, à une température assez élevée, s'applique à un produit alimentaire pour lequel des notions essentielles d'hygiène ne doivent pas être perdues de vue. D'où la nécessité d'un nettoyage aussi fréquent que possible, pour lequel la machine doit être conçue : c'est le cas de la tête de compression de l'invention.

Cette dernière est enfin munie d'une charnière l'articulant au bâti principal de la coextrudeuse. Cela permet un accès également aisé à l'intérieur des chambres de compression via une face non encore utilisée, à savoir le côté amont. Le nettoyage de ladite tête peut donc être totalement réalisée, par l'avant et par l'arrière.

D'une manière générale, l'invention atteint une souplesse de réglage qui ne se trouvait nullement dans ses devancières, et elle autorise un nettoyage très complet sans difficultés particulières. Cette dernière remarque s'applique également à la maintenance, requérant comme le nettoyage un accès aisé à toutes les parties de la tête de compression. Les objectifs principaux sont donc remplis grâce à une conception particulière résolvant individuellement ou en combinaison les problèmes techniques mentionnés auparavant.

Ladite invention va maintenant être décrite plus en détail, notamment en référence aux figures annexées, pour lesquelles :
- La figure 1 est une vue éclatée en coupe longitudinale de la tête de compression, de la plaque de fermeture et des filières ; et
- La figure 2 est une vue en perspective de ladite tête de l'invention, en deux éléments distincts, les filières étant fixées à la tête.

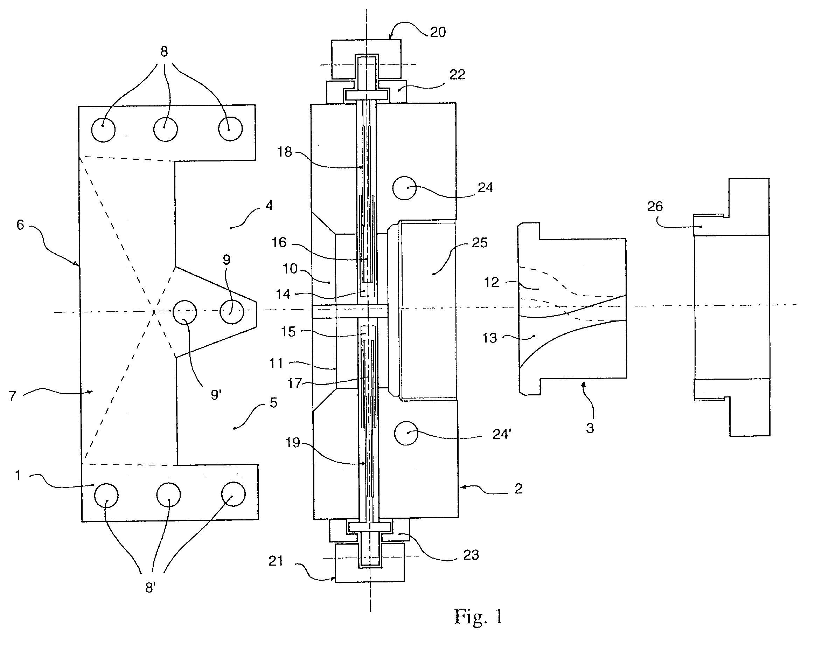

En référence à la figure 1, la tête de compression 1 est fermée sur sa face aval par une plaque de fermeture 2 dans laquelle sont montées les filières d'extrusion 3. La tête 1 comporte deux chambres de compression 4, 5 communiquant via des orifices 6, 7 aux vis sans fin de la coextrudeuse sur laquelle la tête de compression 1 est articulée (non représentées).

La tête comporte encore des canalisations 8, 8' aux extrémités supérieure et inférieure, ainsi qu'en partie médiane 9, 9'. Comme on l'a vu, ces canalisations servent à véhiculer le fluide caloporteur destiné à maintenir constante la température, et donc la viscosité, des pâtes traitées.

La plaque de fermeture 2 comporte deux voies 10, 11 de passage des pâtes, reliées d'une part aux chambres de compression 4, 5, et d'autre part aux voies 12, 13 de la filière d'extrusion 3. Sur le tracé de ces voies 10, 11, des vannes 14, 15, dont la position est réglable verticalement, permettent d'assurer le contrôle du débit de pâte. Ces vannes 14, 15, prenant la forme de plaques, sont dotées de taraudages 16, 17 coopérant avec des tiges filetées 18, 19 manipulables à l'aide de boutons moletés 20, 21 solidaires desdites tiges. Les vannes 14, 15 sont libres en translation dans les rainures qui les logent, alors que les tiges filetées 18, 19 ne sont libres qu'en rotation : leur mouvement rotatif est donc transformé par la rainure faisant office de glissière en un mouvement de translation rectiligne permettant de monter et descendre les vannes 14, 15, et par conséquent d'augmenter ou de réduire le débit de pâte.

Chaque filière de sortie 3 comporte deux vannes 14, 15, dont l'une est placée au-dessus du plan médian, alors que l'autre est positionnée sous ce plan. Les tiges filetées 18, 19 sont blocables par des vis de pression intégrées aux boutons moletés permettant d'éviter tout déréglage pendant la phase de production. Les bagues 22, 23 permettent l'arrêt en translation des tiges filetées 18, 19.

La plaque de fermeture 2 comporte également des canalisations 24, 24' permettant à un médium caloporteur de circuler afin de maintenir une température uniforme tout au long de l'écoulement du produit à extruder.

Les filières 3 montées dans cette plaque 2 sont au nombre de 1 à 10, et donnent aux produits fabriqués leur forme finale. Avec le système de vanne précédemment décrit, l'entraxe minimum entre deux filières consécutives est de 90 mm pour un produit de 25 mm de diamètre.

Chaque filière 3 est enfichée dans l'alésage 25, et serrée en butée par un écrou de pression 26. Ce dernier est doté d'un filetage externe, et est par conséquent vissé dans l'alésage 25. Cette configuration permet un démontage facile de chaque filière 3, aux fins notamment de changement de production.

Afin de bloquer la filière 3 en rotation lors du serrage de l'écrou de pression 26, on a prévu un ergot qui dépasse de la plaque de fermeture 2, et qui vient s'encastrer dans un logement prévu à cet effet dans la filière 3 (non représentés).

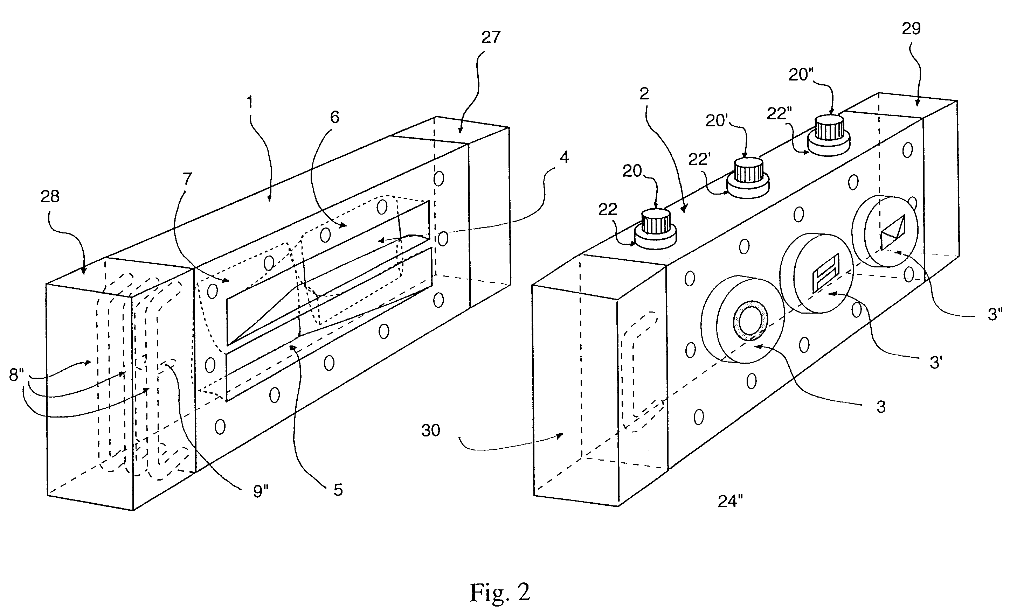

En référence à la figure 2, la forme d'entonnoir déformé dû au fraisage en biais des chambres de compression 4, 5 apparaît mieux, ainsi que le positionnement relatif des orifices 6, 7 communiquant avec les vis sans fin d'extrusion (non représentées). Cette figure fait clairement apparaître le problème des trajets empruntés par les pâtes pour aller vers les différentes filières 3, 3', 3''. Dans un cas, ledit trajet est court, lorsque la filière est en face de l'orifice 6, 7, alors qu'il s'allonge au fur et à mesure du décalage des filières 3, 3', 3'' par rapport auxdits orifices 6, 7. D'où le problème des pertes de charge résolu notamment par la forme des chambres de pression 4, 5 de l'invention.

Les capots latéraux 27, 28 de la tête 1 comportent les extrémités 8'' en boucle des canalisations 8, 8', ainsi que l'extrémité 9'' en boucle des canalisations médianes 9, 9'.

La plaque de fermeture 2 comporte également des capots latéraux 29, 30 ayant la même fonction, percés des boucles d'extrémité 24'' des canalisations 24, 24'.

Cette figure fait également apparaître les boutons moletés 20, 20', 20'' supérieurs, avec leurs bagues d'arrêt en translation 22, 22', 22''. Les filières 3, 3', 3'', représentées schématiquement, permettent d'envisager quelques possibilités de fabrication : filière à double anneaux concentriques, filière en H, filière en V, etc. Il est également possible qu'une ou l'autre filière soit monozone, c'est à dire par exemple monocolore, si une vanne est fermée. Les orifices apparaissant sur la face aval de la plaque 2, ainsi que ceux de la tête 1, sont ceux qui sont pratiqués pour permettre la fixation par boulonnage.

Les caractéristiques précédemment décrites constituent celles d'une version préférentielle de l'invention, destinée notamment à montrer la souplesse et la modularité du système, et la facilité des réglages autorisés.

Toutefois, la taille de la tête décrite peut varier en fonction de la taille des machines sur lesquelles elle doit s'adapter. D'autres paramètres de fonctionnement peuvent également être adaptés par l'homme de l'art, en fonction des utilisations requises et des enseignements des revendications.

## Revendications

1. Tête de compression 1 de machine de production de pâte à mâcher ou de pâte à chewing-gum, du type coextrudeuse à au moins une vis sans fin entraînant ladite pâte, chacune débouchant dans une chambre de compression 4, 5 placée en aval des vis sans fin, suivant le sens d'écoulement de la pâte, caractérisée en ce que lesdites chambres de compression 4, 5 ont un volume dont la section, prise perpendiculairement à l'axe des vis sans fin, décroît de telle sorte que les chambres se rétrécissent en direction d'une plaque 2 de fermeture aval, ladite plaque 2 étant démontable et dotée d'au moins une filière d'extrusion 3 de la pâte, la plus petite section étant de dimension telle qu'elle débouche sur toutes les filières d'extrusion 3.

2. Tête de compression selon la revendication 1, caractérisée en ce que les chambres de compression 4, 5 sont en forme d'entonnoirs déformés dont la grande section 6, 7 en entrée est d'allure oblongue, alors que la petite section est d'allure rectangulaire avec deux grands côtés horizontaux, les deux petits côtés formant respectivement un angle aigu et un angle obtus par rapport à l'axe central d'écoulement de la pâte à l'entrée 6, 7.

3. Tête de compression selon l'une des revendications 1 et 2, caractérisée en ce que la plaque de fermeture 2 est dotée de filières d'extrusions 3 démontables reliées aux chambres de compression 4, 5 va un nombre de conduites 10, 11 correspondant au nombre de chambres de compression 4, 5 localisées en amont de ladite plaque 2.

4. Tête de compression selon la revendication précédente, caractérisée en ce que chaque conduite 10, 11 reliant les filières d'extrusion aux chambres de compression est dotée de moyens de réglage ou d'obturation du débit de la pâte.

5. Tête de compression selon la revendication précédente, caractérisée en ce que lesdits moyens de réglage de débit comportent une vanne 14, 15 logée dans une rainure de dimension appropriée pratiquée dans la plaque de fermeture 2, dans laquelle elle est libre en translation, ladite vanne 14, 15 étant munie d'un taraudage 16, 17 dans lequel s'insère une tige filetée 18, 19 solidaire d'un bouton moleté 20, 21 libre en rotation et manipulable de l'extérieur de ladite plaque 2 de fermeture, permettant de faire varier l'ouverture de la conduite 10, 11.

6. Tête de compression selon l'une quelconque des revendications précédentes, caractérisée en ce que les chambres de compression 4, 5 et également les conduits 10, 11 les reliant aux filières d'extrusion 3 sont au nombre de deux.

7. Tête de compression selon la revendication précédente, caractérisée en ce que les boutons moletés 20, 21 sont situés sur les côtés supérieurs et inférieurs de la plaque de fermeture 2, et sont gradués.

8. Tête de compression selon l'une quelconque des revendications précédentes, caractérisée en ce que le volume comportant les chambres de compression 4, 5, ainsi que la plaque de fermeture 2, comportent des canaux de circulation 8, 8', 9, 9' 24, 24', d'un fluide caloporteur maintenant une température prédéterminée dans ladite tête, lesdits canaux 8'', 9'', 24'' circulant également dans des capots latéraux 27, 28, 29, 30 permettant l'alimentation et la fermeture de boucles de circulation du fluide, et étant démontables de manière à permettre un accès aux canaux 8, 8', 8'', 9, 9', 9'', 24, 24', 24''.

9. Tête de compression selon l'une quelconque des revendications précédentes, caractérisée en ce que ladite tête 1 est munie d'une charnière l'articulant au bâti principal de la coextrudeuse.

## Claims

1. Compression head 1 for a machine producing chewing gum paste, of the co-extruder type with at least one endless screw propelling the said paste, each emerging into a compression chamber 4, 5 placed downstream from the endless screws, in the direction of flow of the paste, characterized in that the said compression chambers 4, 5 have a volume of which the cross section, taken perpendicular to the axes of the endless screws, decreases so that the chambers narrow in the direction of a downstream closing plate 2, the said plate being detachable and provided with at least one die 3 for extruding the paste, the size of the smallest cross section being such that it emerges over all the extrusion dies 3.

2. Compression head according to claim 1, characterized in that the compression chambers 4, 5 are in the shape of deformed funnels of which the large cross section 6, 7 at the inlet has an oblong appearance, whereas the small cross section has a rectangular appearance with the two long sides horizontal, the two short sides forming an acute angle and an obtuse angle respectively to the central axis of the flow of paste at the inlet 6, 7.

3. Compression head according to either of claims 1 or 2, characterized in that the closing plate 2 is provided with detachable extrusion dies 3 connected to the compression chambers 4, 5 via a number of conduits 10, 11 corresponding to the number of compression chambers 4, 5 located upstream from the said plate 2.

4. Compression head according to the preceding claim, characterized in that each conduit 10, 11 connecting the extrusion dies to the compression chambers is provided with means of regulating or cutting off the said flow of paste.

5. Compression head according to the preceding claim, characterized in that the said means for adjusting the flow comprise a valve 14, 15 housed in a groove with a suitable size made in the closing plate 2, in which it is free to move in translation, the said valve 14, 15 being provided with an internal thread 16, 17 in which is inserted a threaded rod 18, 19 firmly attached to a knurled knob 20, 21 which is free to rotate and can be manipulated from outside the said closing plate 2, enabling the opening of the conduit 10, 11 to be varied.

6. Compression head according to any of the preceding claims, characterized in that the compression chambers 4, 5 and also the conduits 10, 11 connecting them to the extrusion dies 3 are two in number.

7. Compression head according to the preceding claim, characterized in that the knurled knobs 20, 21 are situated on the upper and lower sides of the closing plate 2, and are graduated.

8. Compression head according to any of the preceding claims, characterized in that the volume comprising the compression chambers 4, 5, as well as the closing plate 2, comprise circulation channels 8, 8', 9, 9', 24, 24', for a heat transfer fluid maintaining a predetermined temperature in the said head, the said channels 8'', 9'', 24'' also circulating in the side covers 27, 28, 29, 30 enabling the fluid circulation loops to be supplied and closed, and being detachable so as to permit access to the channels 8, 8', 8'', 9, 9', 9'', 24, 24', 24''.

9. Compression head according to any of the preceding claims, characterized in that the said head 1 is provided with a hinge articulated to the main frame of the co-extruder.

## Patentansprüche

1. Kompressionskopf 1 für eine Maschine zur Herstellung von Kaumasse oder Chewing-Gum-Masse des Koextrusionstyps, die wenigstens eine die Masse antreibende Endlosschraube enthält, wovon jede in eine Kompressionskammer 4, 5 mündet, die sich in Richtung des Ausfließens der Masse hinter den Endlosschrauben befindet, dadurch gekennzeichnet, daß die Kompressionskammern 4, 5 ein Volumen besitzen, dessen Querschnitt senkrecht zur Mittellinie der Endlosschrauben in der Weise abnimmt, daß die Kammern in Richtung einer hinteren Verschlußplatte 2 schmäler werden, wobei die Platte 2 abnehmbar ist und mit wenigstens einem Extrusionsmundstück 3 für die Masse versehen ist, wobei der kleinste Querschnitt eine Abmessung besitzt, derart, daß er in sämtliche Extrusionsmundstücke 3 mündet.

2. Kompressionskopf nach Anspruch 1, dadurch gekennzeichnet, daß die Kompressionskammern 4, 5 die Form deformierter Trichter besitzen, deren großer Querschnitt 6, 7 am Eingang einen langgestreckten Verlauf besitzt, während der kleine Querschnitt einen rechtwinkligen Verlauf mit zwei horizontalen langen Seiten besitzt, wobei die zwei kurzen Seiten einen spitzen Winkel bzw. einen stumpfen Winkel in bezug auf die Ausflußmittelachse der Masse am Eingang 6, 7 bilden.

3. Kompressionskopf nach einem der Ansprüche 1 und 2, dadurch gekennzeichnet, daß die Verschlußplatte 2 mit Extrusionsmundstücken 3 versehen ist, die mit den Kompressionskammern 4, 5 über eine Anzahl von Leitungen 10, 11, die der Anzahl der vor der Platte 2 befindlichen Kompressionskammern 4, 5 entspricht, abnehmbar verbunden sind.

4. Kompressionskopf nach dem vorangehenden Anspruch, dadurch gekennzeichnet, daß jede Leitung 10, 11, die die Extrusionsmundstücke mit den Kompressionskammern verbindet, mit Einstell- oder Verschlußmitteln für den Durchsatz der Masse versehen ist.

5. Kompressionskopf nach dem vorangehenden Anspruch, dadurch gekennzeichnet, daß die Durchsatzeinstellmittel einen Schieber 14, 15 enthalten, der sich in einer in der Verschlußplatte 2 ausgebildeten Rinne mit geeigneten Abmessungen befindet, in der er in Längsrichtung frei verschiebbar ist, wobei der Schieber 14, 15 mit einem Innengewinde 16, 17 versehen ist, in das ein Gewindestift 18, 19 eingesetzt ist, der mit einem Rändelknopf 20, 21 verbunden ist, der frei drehbar und von außerhalb der Verschlußplatte 2 betätigbar ist und die Veränderung der Öffnung der Leitung 10, 11 ermöglicht.

6. Kompressionskopf nach irgendeinem der vorangehenden Ansprüche, dadurch gekennzeichnet, daß die Kompressionskammern 4, 5 und außerdem die Leitungen 10, 11, die sie mit den Extrusionsmundstücken 3 verbinden, in der Anzahl Zwei vorhanden sind.

7. Kompressionskopf nach dem vorangehenden Anspruch, dadurch gekennzeichnet, daß sich die Rändelknöpfe 20, 21 an den oberen und unteren Seiten der Verschlußplatte 2 befinden und mit einer Gradeinteilung versehen sind.

8. Kompressionskopf nach irgendeinem der vorangehenden Ansprüche, dadurch gekennzeichnet, daß das die Kompressionskammern 4, 5 sowie die Verschlußplatte 2 enthaltende Volumen Zirkulationskanäle 8, 8', 9, 9', 24, 24' für ein wärmetragendes Fluid enthalten, das im Kopf eine vorgegebene Temperatur aufrechterhält, wobei die Kanäle 8'', 9'', 24'' außerdem in seitlichen Abdeckhauben 27, 28, 29, 30 verlaufen, die die Versorgung und die Schließung der Fluidzirkulationsschleifen ermöglichen und abnehmbar sind und so einen Zugang zu den Kanälen 8, 8', 8'', 9, 9', 9'', 24, 24', 24'' ermöglichen.

9. Kompressionskopf nach irgendeinem der vorangehenden Ansprüche, dadurch gekennzeichnet, daß der Kopf 1 mit einem Scharnier versehen ist, an dem er am Hauptrahmen der Koextrusionsvorrichtung angelenkt ist.
